# EUROPEAN PATENT APPLICATION

(11) **EP 2 228 775 A2**
(43) Date of publication of application: **15.09.2010**
(21) Application number: 09004244.1
(22) Date of filing: 25.03.2009
(51) Int. Cl.: G07F 7/10

(54) **Information storage medium, authentication data generation method, and medium authentication system**

(30) Priority: 10.03.2009 JP 2009056924
(71) Applicant: Kabushiki Kaisha Toshiba, Minato-ku, Tokyo 105-8001 (JP)
(72) Inventor: Tuda, Yusuke, Tokyo 105-8001 (JP)
(74) Representative: HOFFMANN EITLE

(57) **Abstract**

An authentication data generation method includes receiving (ST10) an authentication command from an authentication device, determining (ST20) a communication protocol with the authentication device, changing (ST32, ST33) encryption key reference information contained in the authentication command based upon the determination result of the communication protocol with the authentication device, selecting (ST37) a target encryption key corresponding to the changed encryption key reference information from a plurality of encryption keys stored in advance, generating (ST37) authentication data based upon the target encryption key and inclusion data included in the authentication command, and transmitting (ST50) the authentication data to the authentication device.

## Description

The present invention relates to, for example, an information storage medium called a smartcard (IC card) having incorporated in it an integrated circuit (IC) chip having such a control device as a CPU, ROM, RAM, or EEPROM. The present invention relates to, for example, an authentication data generation method applied to the information storage medium. The present invention relates to, for example, an authentication system comprising the information storage medium and a medium authentication device which authenticates the information storage medium.

In recent years, smartcards provided with various functions have appeared. For example, Jpn. Pat. Appln. KOKAI Publication No. 2005-216234 discloses a smartcard provided with a contact interface comprising metal terminals or the like, and a non-contact interface comprising an antenna for performing transmission and reception of a radio signal, and the like.

Further, smartcards which can accept a plurality of communication protocols also appear. For example, Jpn. Pat. Appln. KOKAI Publication No. 2004-151864 discloses a smartcard which can accept both communication protocols of TCP/IP and ISO7816.

According to appearing of these smartcards, application of the smartcards spreads, so that, for example, smartcards are used in various fields as not only a credit card, a commuter pass, a passport, a license, and means for business transactions but also such an ID card as an employee ID card, a membership card, or an insurance card.

Since the smartcard is used in an environment required for high security in this manner, security countermeasures of the smartcard are important.

According to enhancement of security applied to a smartcard, processing speed within the smartcard decreases and more memory within the smartcard is used as a general trend.

Smartcard providers try to apply higher security to smartcards, but they must consider adverse effects of the application, as described above. Therefore, although there are higher security countermeasures, a case arises that the higher security countermeasures cannot be applied to a smartcard.

An object of the present invention is to provide an information storage medium where higher security countermeasures can be performed according to a situation. Another object of the present invention is also to provide an authentication data generation method which can generate authentication data based upon higher security countermeasures according to a situation. Still another object of the present invention is to provide a medium authentication system which can generate authentication data based upon higher security countermeasures according to a situation to authenticate a medium based upon the authentication data.

According to one embodiment of the present invention, there is provided an information storage medium comprising: a storage unit configured to store a plurality of encryption keys therein; a signal receiving unit configured to receive an authentication command from an authentication device; a generation unit configured to determine a communication protocol with the authentication device, change encryption key reference information included in the authentication command based upon a determination result of the communication protocol with the authentication device, select a target encryption key corresponding to the changed encryption key reference information from the plurality of encryption keys, and generate authentication data based upon the target encryption key and inclusion data included in the authentication command; and a signal transmission unit configured to transmit the authentication data to the authentication device.

According to another embodiment of the present invention, there is provided an authentication data generation method comprising: receiving an authentication command from an authentication device; determining a communication protocol with the authentication device; changing encryption key reference information contained in the authentication command based upon the determination result of the communication protocol with the authentication device; selecting a target encryption key corresponding to the changed encryption key reference information from a plurality of encryption keys stored in advance; generating authentication data based upon the target encryption key and inclusion data included in the authentication command; and transmitting the authentication data to the authentication device.

According to still another embodiment, there is provided a medium authentication system comprising an information storage medium and an authentication device authenticating the information storage medium, wherein the information storage medium: comprising a encryption key storage unit configured to store a plurality of encryption keys therein; a command receiving unit configured to receive an authentication command from an authentication device; an authentication data generation unit configured to determine a communication protocol with the authentication device, change encryption key reference information included in the authentication command based upon the determination result of the communication protocol with the authentication device, select a target encryption key corresponding to the changed encryption key reference information from the plurality of encryption keys, and generate authentication data based upon the target encryption key and inclusion data included in the authentication command; and an authentication data transmission unit configured to transmit the authentication data to the authentication device, and the authentication device comprising: a decryption key storage unit configured to store a plurality of decryption keys corresponding to the plurality of encryption keys; a command transmission unit configured to transmit the authentication command to the information storage medium; an authentication data receiving unit configured to receive the authentication data from the information storage medium; and an authentication unit configured to change encryption key reference information included in the authentication command based upon the determination result of a communication protocol with the information storage medium, select a target decryption key corresponding to the changed encryption key reference information from the plurality of decryption keys, decrypt the inclusion data from the authentication data based upon the target decryption key, and authenticate the information storage medium based upon the decrypted inclusion data.

The invention can be more fully understood from the following detailed description when taken in conjunction with the accompanying drawings, in which:
FIG. 1 is a block diagram showing a schematic configuration of a smartcard system (medium authentication system) according to one embodiment of the present invention;
FIG. 2 is a block diagram showing a schematic configuration of a card reader/writer of the smartcard system shown in FIG. 1;
FIG. 3 is a diagram showing one example of data stored in a data memory in the card reader/writer shown in FIG. 2;
FIG. 4 is a block diagram showing a schematic configuration of a smartcard of the smartcard system shown in FIG. 1;
FIG. 5 is a diagram showing one example of data stored in a data memory in the smartcard shown in FIG. 4;
FIG. 6 is a flowchart for explaining an outline of communication between the card reader/writer and the smartcard; and
FIG. 7 is flowchart showing one example of change processing of encryption processing based upon a communication protocol.

Embodiments of the present invention will be explained below with reference to the drawings.

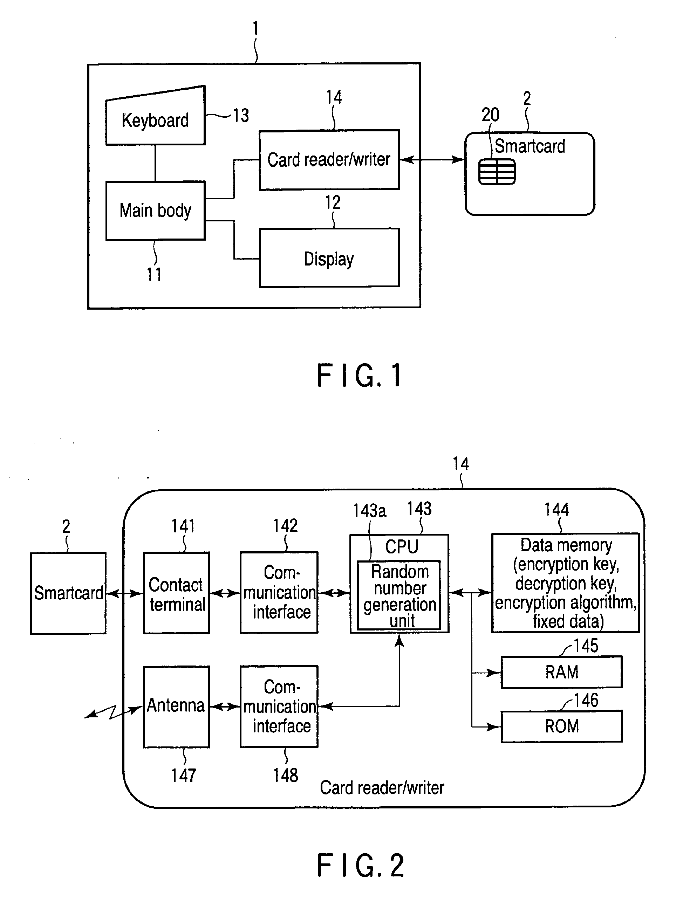

FIG. 1 is a block diagram showing a schematic configuration of a smartcard system (medium authentication system) according to one embodiment of the present invention. As shown in FIG. 1, the smartcard system comprises a terminal 1 and a smartcard 2 (information storage medium). The terminal 1 is provided with a main body (an upper device) 11, a display 12, a keyboard 13, and a card reader/writer 14. The terminal 1 is configured to be capable of performing communication with the smartcard 2, and the terminal 1 performs transmission of data to the smartcard 2 and reception of data from the smartcard 2.

The main body 11 executes applications and handles input and output of data. The display 12 displays a communication result with the smartcard 2, an authentication result, and the like. The keyboard 13 inputs characters, numerals, and the like into the main body 11. The card reader/writer 14 communicates with the smartcard 2.

Incidentally, in the embodiment, a case including a combination type where the smartcard 2 supports both contact-type communication and non-contact-type communication and similarly a combination type where the card reader/writer 14 supports both contact-type communication and non-contact-type communication will be explained.

FIG. 2 is a block diagram showing a schematic configuration of the card reader/writer 14 according to one embodiment of the present invention. As shown in FIG. 2, the card reader/writer 14 is provided with a contact terminal 141, a communication interface 142, a CPU 143, a data memory 144, a RAM 145, a ROM 146, an antenna 147, and a communication interface 148.

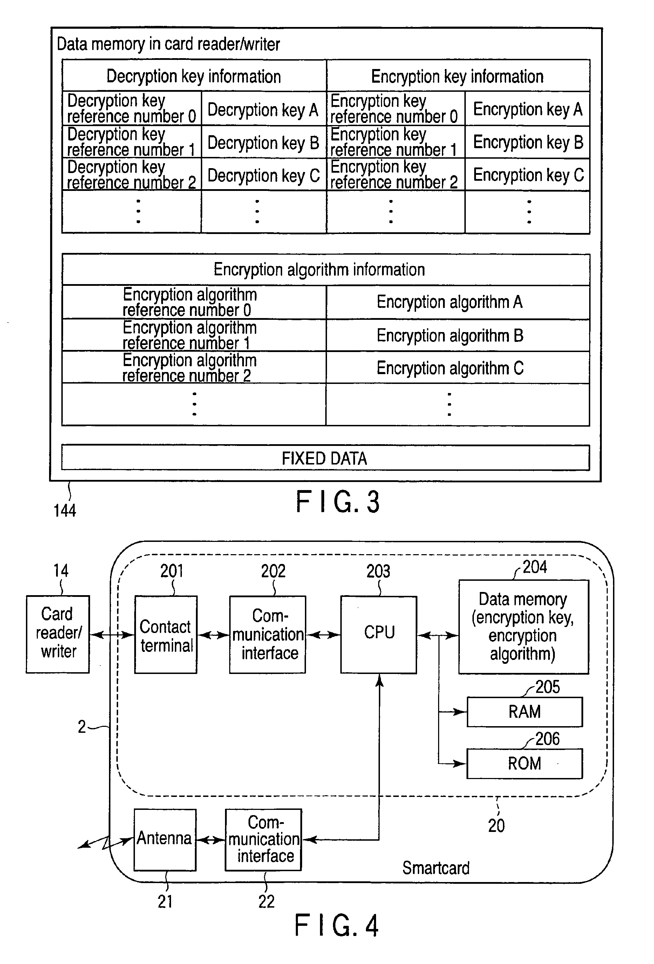

FIG. 4 is a block diagram showing a schematic configuration of a smartcard according to an embodiment of the present invention. As shown in FIG. 4, the smartcard 2 is a plastic card, for example, and it is provided with an IC chip 20 (IC module). The IC chip 20 is provided with a contact terminal 201, a communication interface 202, a CPU 203, a data memory 204, a RAM 205, and a ROM 206. Further, the smartcard 2 is provided with an antenna 21 and a communication interface 22.

The contact terminal 141 of the card reader/writer 14 comes into contact with the contact terminal 201 of the smartcard 2 so that data is transmitted and received between the card reader/writer 14 and the smartcard 2. The communication interface 142 controls input and output of data transmitted to the smartcard 2 and data received from the smartcard 2.

The antenna 147 of the card reader/writer 14 communicates with the antenna 21 of the smartcard 2 in a non-contact state, where data is transmitted and received between the card reader/writer 14 and the smartcard 2. The communication interface 148 controls input and output of data transmitted to the smartcard 2 and data received from the smartcard 2.

The CPU 143 generates various commands (authentication commands) based upon instructions from the main body (upper device) 11. Further, the CPU 143 is provided with a random number generation unit 143a, and the random number generation unit 143a generates a random number based upon an instruction from the main body (upper device) 11. The data memory 144 is a nonvolatile memory such as EEPROM or FRAM. The RAM 145 is work memory temporarily storing data transmitted from the smartcard 2 therein, for example. The ROM 146 is a memory storing a control program and the like therein.

As shown in FIG. 3, the data memory 144 stores decryption key information, encryption key information, encryption algorithm information, and fixed data therein. The decryption key information includes a plurality of decryption keys A, B, C, ... , and the respective decryption keys A, B, C, ... are managed by decryption key reference numbers 0, 1, 2, .... The encryption key information includes a plurality of encryption keys A, B, C, ... , and the respective encryption keys A, B, C, ... are managed by encryption key reference numbers 0, 1, 2, .... The abovementioned respective decryption keys A, B, C, ... and the respective encryption keys A, B, C, ... are keys corresponding to one another. The encryption algorithm information includes a plurality of encryption algorithms A, B, C, ... and the respective encryption algorithms A, B, C, ... are managed by encryption algorithm reference numbers 0, 1, 2, .... The authentication processing utilizing the decryption key information, the encryption key information, the encryption algorithm information, and the fixed data will be explained in detail later.

On the other hand, the contact terminal 201 of the smartcard 2 comes into contact with the contact terminal 141 of the card reader/writer 14, so that data is transmitted and received between the smartcard 2 and the card reader/writer 14. The communication interface 202 controls input and output of data transmitted to the card reader/writer 14 and data received from the card reader/writer 14.

The antenna 21 of the smartcard 2 communicates with the antenna 147 of the card reader/writer 14 in a non-contact state, so that data is transmitted and received between the smartcard 2 and the card reader/writer 14. The communication interface 22 controls input and output of data transmitted to the card reader/writer 14 and data received from the card reader/writer 14.

The CPU 203 performs various kinds of processing based upon various commands (authentication commands) from the card reader/writer 14. The data memory 204 is such a nonvolatile memory as EEPROM or FRAM. The RAM 205 is a work memory temporarily storing therein data transmitted from the card reader/writer 14, for example. The ROM 146 is a memory storing a control program and the like therein.

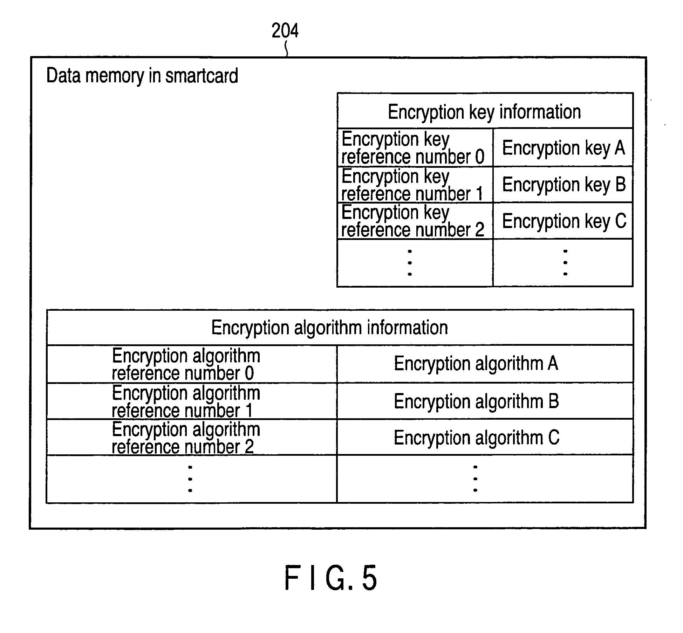

As shown in FIG. 5, the data memory 204 stores the encryption key information and the encryption algorithm information therein. The encryption key information and the encryption algorithm information are as already described above.

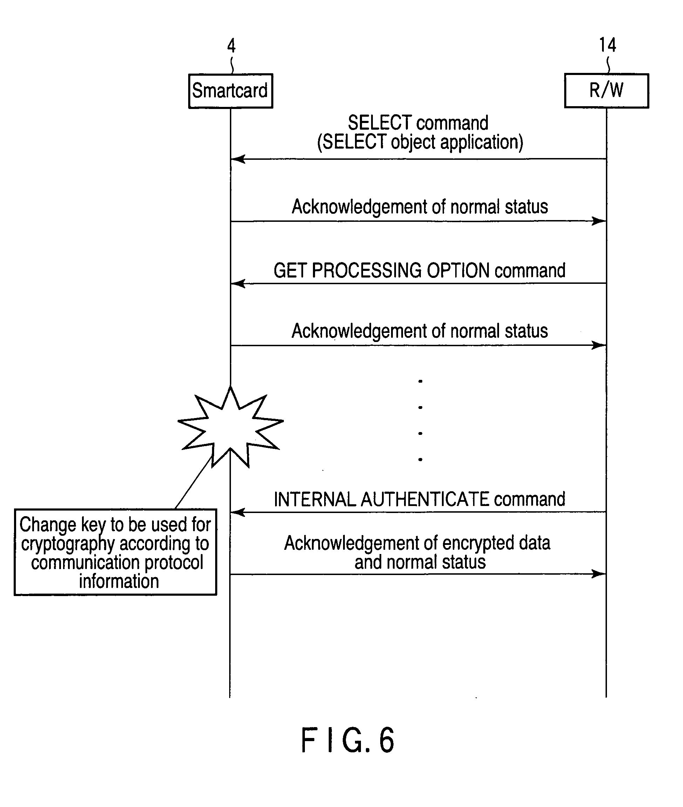

Next, outline of communication between the card reader/writer 14 and the smartcard 2 will be explained with reference to the flowchart shown in FIG. 6.

First of all, the card reader/writer 14 transmits a SELECT command for selecting an object application via the contact terminal 141 or the antenna 147. The smartcard 2 receives the SELECT command via the contact terminal 201 or the antenna 21 to return a normal status.

The card reader/writer 14 receives the normal status via the contact terminal 141 or the antenna 147 and transmits an interpreter command designating a parameter reading internal record information within the smartcard 2 via the contact terminal 141 or the antenna 147. The smartcard 2 receives the interpreter command via the contact terminal 201 or the antenna 21 to return record information corresponding to the parameter.

The card reader/writer 14 receives the record information via the contact terminal 141 or the antenna 147 to transmit a GET PROCESSING OPTION command to the smartcard 2. On the other hand, the smartcard 2 receives the GET PROCESSING OPTION command via the contact terminal 201 or the antenna 21 to return the card reader/writer 14 to normal status.

Transmission and reception of necessary data are performed between the card reader/writer 14 and the smartcard 2 in this manner, so that, for example, the card reader/writer 14 generates an INTERNAL AUTHENITICATE command (authentication command) for authenticating the smartcard 2 to transmit the INTERNAL AUTHENITICATE command via the contact terminal 141 and the antenna 147. The smartcard 2 receives the INTERNAL AUTHENITICATE command via the contact terminal 201 and the antenna 21 to return encrypted authentication data and normal status.

Here, the authentication command generated by the card reader/writer 14 will be briefly explained. In the embodiment, a first authentication command corresponding to a first communication protocol for non-contact-type communication (T=CL [Connectionless]) and a second authentication command corresponding to a second communication protocol for contact-type communication (T=1) will be explained.

A first authentication command format corresponding to the first communication protocol for non-contact-type communication (T=CL) is defined, for example, in the following manner.

First authentication command format:
CLA/INS/P1/P2/Lc/Data/Le
   CLA: class byte
   INS: instruction code
   P1: parameter 1
   P2: parameter 2

A second authentication command format corresponding to the second communication protocol for contact-type communication (T=1) is defined, for example, in the following manner.

Second authentication command format:
NAD/PCB/Len/CLA/INS/P1/P2/Lc/Data/Le/EDC
   NAD: node address
   PCB: protocol control byte
   Len: length
   EDC: error defection code

For example, P1 contained in the first and second authentication command formats shows a encryption algorithm reference number j (j: integer, 0≤j), and P2 contained in the first and second authentication command formats shows a encryption key reference number n (n: integer, 0≤n). Data contained in the first and second authentication command formats includes a random number and fixed data. Incidentally, the random number is generated by the random number generation unit 143a, as described above.

Incidentally, in the embodiment, the communication between the smartcard 2 and the card reader/writer 14 according to the first or second communication protocol will be explained, as described above, but the present invention is not limited to this communication. For example, the present invention can be applied to communication between the smartcard 2 and the card reader/writer 14 according to a third communication protocol (T=0).

Subsequently, authentication processing based upon the authentication command will be explained. The smartcard 2 which has received the authentication command determines a communication protocol with the card reader/writer 14 and changes or does not change an encryption system based upon the determination result of the communication protocol. Thereby, the encryption level can be changed according to the communication protocol. That is, a security level can be changed according to the communication protocol (status).

For example, the smartcard 2 changes or does not change the encryption key based upon the determination result of the communication protocol. That is, it is possible that the smartcard 2 changes the encryption key based upon the non-contact communication protocol and does not change the encryption key based upon the contact communication protocol. Further, it is possible that the smartcard 2 changes or does not change the encryption algorithm based upon the determination result of the communication protocol. That is, it is possible that the smartcard 2 changes the encryption algorithm based upon the non-contact communication protocol and does not change the encryption algorithm based upon the contact communication protocol.

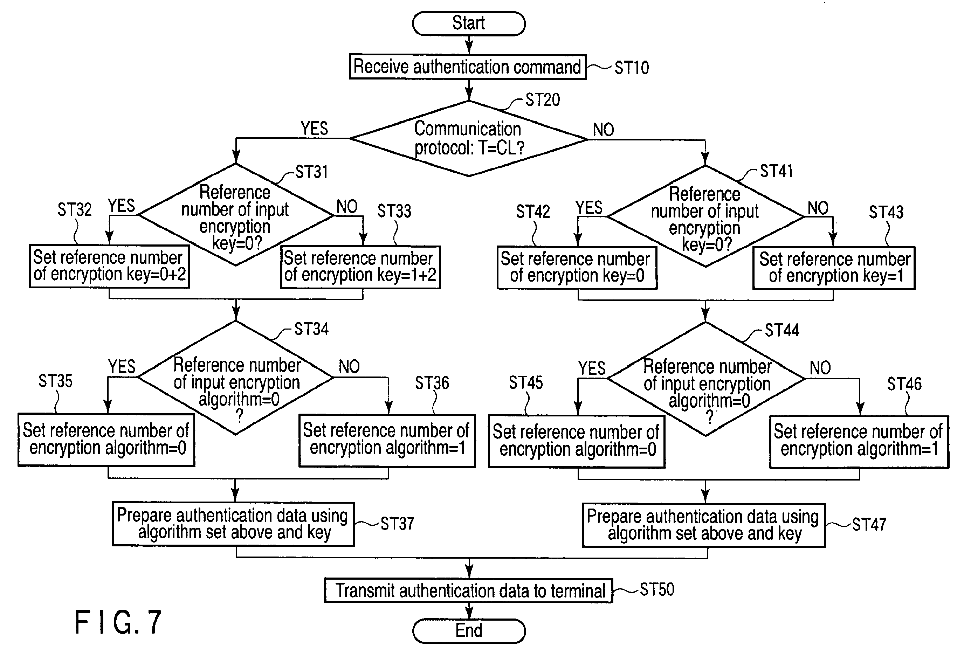

One example of change of the encryption processing based upon the communication protocol will be explained below with reference to a flowchart shown in FIG. 7.

First of all, the card reader/writer 14 generates a first or second authentication command. As described above, the first and second authentication commands include a encryption key reference number n, a encryption algorithm reference number j, a random number, and fixed data, and the card reader/writer 14 stores the encryption key reference number n, the encryption algorithm reference number j, the random number, and the fixed data therein.

The card reader/writer 14 transmits the first or second authentication command to the smartcard 2, while the smartcard 2 receives the first or second authentication command (ST10). The CPU 203 of the smartcard 2 analyzes the received first or second authentication command to determine a communication protocol. The CPU 203 can determine the communication protocol from the format of the received first or second authentication command, or it can determine the communication protocol according to whether the authentication command is received by the contact-type communication (the contact terminal 201) or the non-contact-type communication (the antenna 21).

For example, when the CPU 203 determines that the communication accords to the first communication protocol (ST20, YES), it performs change processing of the encryption key reference number. The CPU 203 adds m1 (m1: integer) to encryption key reference number n contained in the received first authentication command to change encryption key reference number n and selects a target encryption key corresponding to changed encryption key reference number (n+m1) from a plurality of encryption keys A, B, C, ... stored in the data memory 204. For example, the CPU 203 adds 2 to a encryption key reference number 0 (ST31, YES) (ST32) and sets a encryption key C corresponding to encryption key reference number 2. Alternatively, the CPU 203 adds 2 to encryption key reference number 1 (ST31, NO) (ST33) and sets a encryption key D corresponding to encryption key reference number 3.

Further, the CPU 203 selects a target encryption algorithm corresponding to a encryption algorithm reference number j contained in the received first authentication command from the plurality of encryption algorithms A, B, C, ... stored in the data memory 204. For example, the CPU 203 sets a encryption algorithm A corresponding to encryption algorithm reference number 0 (ST34, YES) (ST35). Alternatively, the CPU 203 sets a encryption algorithm B corresponding to encryption algorithm reference number 1 (ST34, NO) (ST36) .

Further, the CPU 203 generates authentication data based upon set encryption algorithm A and encryption key C, and the fixed data (ST37). Alternatively, the CPU 203 generates authentication data based upon set encryption algorithm B and encryption key D, and the fixed data (ST37). The smartcard 2 transmits the authentication data to the card reader/writer 14 (ST50).

The card reader/writer 14 receives the authentication data from the smartcard 2 and the CPU 143 of the card reader/writer 14 analyzes the authentication data and authenticates the smartcard based upon the analysis result. The CPU 143 discriminates the communication protocol with the smartcard 2. For example, when the CPU 143 determines that the communication accords to the first communication protocol, it adds m1 (m1: integer) to encryption key reference information n contained in the first authentication command transmitted to the smartcard 2 to change encryption key reference number n and selects a target decryption key corresponding to changed encryption key reference number (n+m1) from the plurality of decryption keys A, B, C, ... stored in the data memory 144. For example, the CPU 143 adds 2 to encryption key reference number 0 and selects decryption key C corresponding to encryption key reference number 2. Alternatively, the CPU 143 adds 2 to encryption key reference number 1 and selects decryption key D corresponding to encryption key reference number 3. Further, the CPU 143 selects a decoding algorithm corresponding to encryption algorithm reference information j contained in the first authentication command. For example, the CPU 143 selects a decoding algorithm 0 corresponding to encryption algorithm reference information 0. Alternatively, the CPU 143 selects a decoding algorithm 1 corresponding to encryption algorithm reference information 1.

The CPU 143 decodes the random number and the fixed data from the authentication data based upon decryption key C and the decoding algorithm 0. Alternatively, the CPU 143 decodes the random number and the fixed data from the authentication data based upon decryption key D and the decoding algorithm 1. The CPU 143 compares the decoded fixed data and the fixed data contained in the first authentication command with each other, and it authenticates the smartcard 2 if both the data coincide with each other, but it does not authenticate the smartcard 2 if both the data do not coincide with each other.

In the above explanation, the case that the encryption algorithm is not changed has been explained, but the encryption algorithm can be changed like the encryption key. For example, when the CPU 203 determines that the communication accords to the first communication protocol, the CPU 203 adds k1 (k1: integer) to encryption algorithm reference number j contained in the received first authentication command to change encryption algorithm reference number j and selects a target encryption algorithm corresponding to changed encryption key reference number (j+k1) from a plurality of encryption algorithms A, B, C, ... stored in the data memory 204. For example, the CPU 203 adds 1 to encryption algorithm reference number 0 and sets a encryption algorithm B corresponding to encryption algorithm reference number 1. Alternatively, the CPU 203 adds 1 to encryption algorithm reference number 1 and sets encryption key C corresponding to encryption algorithm reference number 2.

In this case, the CPU 203 generates authentication data based upon set encryption algorithm B and encryption key C, and the fixed data. Alternatively, the CPU 203 generates authentication data based upon set encryption algorithm C and encryption key D, and the fixed data. The smartcard 2 transmits the authentication data to the card reader/writer 14.

The card reader/writer 14 receives the authentication data from the smartcard 2 and the CPU 143 of the card reader/writer 14 analyzes the authentication data and authenticates the smartcard 2 based upon the analysis result. For example, when the CPU 143 determines that the communication accords to the first communication protocol, it adds m1 (m1: integer) to encryption key reference number n contained in the first authentication command transmitted to the smartcard 2 to change encryption key reference number n and selects a target decryption key corresponding to changed encryption key reference number (n+m1) from the plurality of decryption keys A, B, C, ... stored in the data memory 144. For example, the CPU 143 adds 2 to encryption key reference number 0 and selects decryption key C corresponding to encryption key reference number 2. Alternatively, the CPU 143 adds 2 to encryption key reference number 1 and selects decryption key D corresponding to encryption key reference number 3.

Further, the CPU 143 adds k1 to encryption algorithm reference information j contained in the first authentication command transmitted to the smartcard 2 to change encryption algorithm reference number j and select a decoding algorithm (j+k1) corresponding to changed encryption algorithm reference number (j+k1). For example, the CPU 143 adds 1 to encryption algorithm reference information 0 and selects a decoding algorithm 1 corresponding to encryption algorithm reference number 1. Alternatively, the CPU 143 adds 1 to encryption algorithm reference information 1 and selects decoding algorithm 2 corresponding to encryption algorithm reference number 2.

The CPU 143 decodes the random number and the fixed data from the authentication data based upon decryption key C and decoding algorithm 1. Alternatively, the CPU 143 decodes the random number and the fixed data from the authentication data based upon decryption key D and decoding algorithm 2. The CPU 143 compares the decoded fixed data and the fixed data contained in the first authentication command with each other, and if both the data coincide with each other, the CPU 143 authenticates the smartcard 2, but if both the data do not coincide with each other, the CPU 143 does not authenticate the smartcard 2.

In the above explanation, the case that the encryption key is changed or the encryption algorithm is changed at the communication time according to the first communication protocol has been explained. Next, processing at a communication time according to the second communication protocol will be explained.

For example, when the CPU 203 determined that the communication accords to the second communication protocol (ST20, YES), it performs change processing of the encryption key reference number. The CPU 203 adds m2 (m2: integer) to encryption key reference number n contained in the received second authentication command to change encryption key reference number n and selects a target encryption key corresponding to changed encryption key reference number (n+m2) from the plurality of encryption keys A, B, C, ... stored in the data memory 204. Incidentally, in the embodiment, for example, m2=0 is set. Thereby, the encryption key reference number is not changed at the communication time according to the second communication protocol. For example, the CPU 203 adds 0 to encryption key reference number 0 (ST41, YES) (ST42) and sets encryption key A corresponding to encryption key reference number 0. Alternatively, the CPU 203 adds 0 to encryption key reference number 1 (ST41, NO) (ST43) and sets encryption key B corresponding to encryption key reference number 1.

Further, the CPU 203 selects a target encryption algorithm corresponding to encryption algorithm reference number j contained in the received second authentication command from the plurality of encryption algorithms A, B, C, ... stored in the data memory 204. For example, the CPU 203 sets encryption algorithm A corresponding to encryption algorithm reference number 0 (ST44, YES) (ST45). Alternatively, the CPU 203 sets encryption algorithm B corresponding to encryption algorithm reference number 1 (ST44, NO) (ST46).

Further, the CPU 203 generates authentication data based upon set encryption algorithm A and encryption key A, and the fixed data (ST47). Alternatively, the CPU 203 generates authentication data based upon set encryption algorithm B and encryption key B and the fixed data (ST47). The smartcard 2 transmits the authentication data to the card reader/writer 14 (ST50).

The card reader/writer 14 receives the authentication data from the smartcard 2, and the CPU 143 of the card reader/writer 14 analyzes the authentication data and authenticates the smartcard 2 based upon the analysis result. The CPU 143 determines the communication protocol with the smartcard 2. For example, when the CPU 143 determines that the communication accords to the second communication protocol, it adds m2 (m2: integer) to encryption key reference information n contained in the second authentication command transmitted to the smartcard 2 to change encryption key reference number n and selects a target decryption key corresponding to changed encryption key reference number (n+m2) from the plurality of decryption keys A, B, C, ... stored in the data memory 144. For example, the CPU 143 adds 0 to encryption key reference number 0 and selects decryption key A corresponding to encryption key reference number 0. Alternatively, the CPU 143 adds 0 to encryption key reference number 1 and selects decryption key B corresponding to encryption key reference number 1. Further, the CPU 143 selects a decoding algorithm corresponding to encryption algorithm reference information j contained in the second authentication command. For example, the CPU 143 selects a decoding algorithm 0 corresponding to decoding algorithm reference information 0. Alternatively, the CPU 143 selects decoding algorithm 1 corresponding to encryption algorithm reference information 1.

The CPU 143 decodes the random number and the fixed data from the authentication data based upon decryption key A and the decoding algorithm 0. Alternatively, the CPU 143 decodes the random number and the fixed data from the authentication data based upon decryption key B and the decoding algorithm 1. The CPU 143 compares the decoded fixed data and the fixed data contained in the second authentication command with each other, and if both the data coincide with each other, the CPU 143 authenticates the smartcard 2 but the CPU 143 does not authenticate the smartcard 2 if both the data do not coincide with each other.

Further, it is assumed that the data lengths of encryption keys C and D are greater than the data lengths of encryption keys A and B. For example, it is assumed that encryption key A is 768 bits long, encryption key B is 968 bits long, encryption key C is 1024 bits long, and encryption key D is 2048 bits long. Thereby, the data length of authentication data generated by encryption key C or D becomes greater than the data length of authentication data generated by encryption key A or B. That is, authentication data having a greater data length is transmitted at a communication time according to the first communication protocol, while authentication data having a smaller data length is transmitted at a communication time according to the second communication protocol. Thereby, security can be made high at the communication time according to the first communication protocol, while processing time can be reduced at the communication time according to the second communication protocol.

Thus, in execution of a predetermined application of the smartcard 2, the case that the card reader/writer 14 has transmitted the first authentication command (including encryption key reference number n) corresponding to the first communication protocol to the smartcard 2 and the case that the card reader/writer 14 has transmitted the second authentication command (similarly including encryption key reference number n) corresponding to the second communication protocol to the smartcard 2 are different from each other regarding a encryption key actually used, where, for example, the security level can be made high at a non-contact communication time and processing time can be shortened at a contact communication time.

## Claims

1. An information storage medium **characterized by** comprising:
a storage unit (204) configured to store a plurality of encryption keys therein;
a signal receiving unit (21, 201) configured to receive an authentication command from an authentication device;
a generation unit (203) configured to determine a communication protocol with the authentication device, change encryption key reference information contained in the authentication command based upon the determination result of the communication protocol with the authentication device, select a target encryption key corresponding to the changed encryption key reference information from the plurality of encryption keys, and generate authentication data based upon the target encryption key and inclusion data contained in the authentication command; and
a signal transmission unit (21, 201) configured to transmit the authentication data to the authentication device.

2. The information storage medium according to claim 1, **characterized in that**
the storage unit stores a plurality of encryption algorithms therein, and
the generation unit selects a target encryption algorithm corresponding to encryption algorithm reference information contained in the authentication command from the plurality of encryption algorithms and generates the authentication data based upon the target encryption algorithm, the target encryption key, and the inclusion data.

3. The information storage medium according to claim 1, **characterized in that**
the storage unit stores a plurality of encryption algorithms therein, and
the generation unit changes a encryption algorithm reference information contained in the authentication command based upon the determination result of the communication protocol with the authentication device, selects a target encryption algorithm corresponding to the changed encryption algorithm reference information from the plurality of encryption algorithms, and generates the authentication data based upon the target encryption algorithm, the target encryption key, and the inclusion data.

4. The information storage medium according to claim 1, **characterized in that**
the generation unit is configured such that, when the communication protocol with the authentication device is a first communication protocol, the generation unit adds m1 (m1: integer) to encryption key reference number n (n: integer, 0≤n) contained in the authentication command to change encryption key reference number n, selects a target encryption key corresponding to changed encryption key reference number (n+m1) from the plurality of encryption keys, and generates the authentication data based upon the target encryption key, and a random number and fixed date contained in the authentication command, and
when the communication protocol with the authentication device is a second communication protocol, the generation unit adds m2 (m2: integer, m1≠m2) to encryption key reference number n (n: integer, 0≤n) contained in the authentication command to change encryption key reference number n, selects a target encryption key corresponding to changed encryption key reference number (n+m2) from the plurality of encryption keys, and generates the authentication data based upon the target encryption key, and the random number and the fixed date contained in the authentication command.

5. The information storage medium according to claim 1, **characterized in that**
the generation unit is configured such that, when the communication protocol with the authentication device is a contact-type communication protocol, the generation unit selects a first target encryption key corresponding to encryption key reference information contained in the authentication command from the plurality of encryption keys without changing the encryption key reference information and generates first authentication data based upon the first target encryption key and the inclusion data, and
when the communication protocol with the authentication device is a non-contact-type communication protocol, the generation unit changes encryption key reference information contained in the authentication command, selects a second target encryption key corresponding to the changed encryption key reference information from the plurality of encryption keys, and generates a second authentication data based upon the second target encryption key and the inclusion data.

6. The information storage medium according to claim 1, **characterized in that**
the generation unit is configured such that, when the communication protocol with the authentication device is a contact-type communication protocol, the generation unit selects a first target encryption key with a first data length corresponding to encryption key reference information contained in the authentication command from the plurality of encryption keys without changing the encryption key reference information and generates first authentication data with a second date length based upon the first target encryption key and the inclusion data, and
when the communication protocol with the authentication device is a non-contact-type communication protocol, the generation unit changes the encryption key reference information contained in the authentication command, selects a second target encryption key with a third data length longer than the first data length corresponding to the changed encryption key reference information from the plurality of encryption keys, and generates second authentication data with a fourth data length longer than the second data length based upon the second target encryption key and the inclusion data.

7. The information storage medium according to claim 1, **characterized in that**
the signal receiving unit includes
a contact-type signal receiving unit (201) configured to contact with the authentication device to receive the authentication command from the authentication device, and
a non-contact-type signal receiving unit (21) configured to receive the authentication command from the authentication device in a non-contacting state with the authentication device,
the signal transmission unit includes
a contact-type signal transmission unit (201) configured to transmit the authentication data to the authentication device in a contacting state corresponding to reception of the authentication command performed by the contact-type signal receiving unit, and
a non-contact-type signal transmission unit (21) configured to transmit the authentication data to the authentication device in a non-contacting state with the authentication device corresponding to reception of the authentication command performed by the non-contact-type signal receiving unit, and
the generation unit determines the communication protocol with the authentication device based upon whether the authentication command is received by the contact-type signal receiving unit or the non-contact-type signal receiving unit.

8. An authentication data generation method **characterized by** comprising:
receiving (ST10) an authentication command from an authentication device;
determining (ST20) a communication protocol with the authentication device, changing (ST32, ST33) encryption key reference information contained in the authentication command based upon the determination result of the communication protocol with the authentication device, selecting (ST37) a target encryption key corresponding to the changed encryption key reference information from a plurality of encryption keys stored in advance, and generating (ST37) authentication data based upon the target encryption key and inclusion data contained in the authentication command; and
transmitting (ST50) the authentication data to the authentication device.

9. A medium authentication system comprising an information storage medium and an authentication device authenticating the information storage medium,
**characterized in that**
the information storage medium comprising:
a encryption key storage unit (204) configured to store a plurality of encryption keys therein;
a command receiving unit (21, 201) configured to receive an authentication command from an authentication device;
an authentication data generation unit (203) configured to determine a communication protocol with the authentication device, change encryption key reference information contained in the authentication command based upon the determination result of the communication protocol with the authentication device, select a target encryption key corresponding to the changed encryption key reference information from the plurality of encryption keys, and generate authentication data based upon the target encryption key and inclusion data contained in the authentication command; and
an authentication data transmission unit (21, 201) configured to transmit the authentication data to the authentication device, and
the authentication device comprising:
a decryption key storage unit (144) configured to store a plurality of decryption keys corresponding to the plurality of encryption keys therein;
a command transmission unit (141, 147) configured to transmit the authentication command to the information storage medium;
an authentication data receiving unit (141, 147) configured to receive the authentication data from the information storage medium; and
an authentication unit (143) configured to change encryption key reference information contained in the authentication command based upon the determination result of the communication protocol with the information storage medium, select a target decryption key corresponding to the changed encryption key reference information from the plurality of decryption keys, decoding the inclusion data from the authentication data based upon the target decryption key, and authenticate the information storage medium based upon the decoded inclusion data.

10. A medium authentication device **characterized by** comprising:
a decryption key storage unit (144) configured to store a plurality of decryption keys corresponding to a plurality of encryption keys therein;
a command transmission unit (141, 147) configured to transmit an authentication command to an information storage medium;
an authentication data receiving unit (141, 147) configured to receive authentication data from the information storage medium; and
an authentication unit (143) configured to change encryption key reference information contained in the authentication command based upon the determination result of a communication protocol with the information storage medium, select a target decryption key corresponding to the changed encryption key reference information from the plurality of decryption keys, decoding inclusion data from the authentication data based upon the target decryption key, and authenticate the information storage medium based upon the decoded inclusion data.
